# EUROPÄISCHE PATENTSCHRIFT

(11) **EP 1 591 677 B1**
(45) Veröffentlichungstag und Bekanntmachung des Hinweises auf die Patenterteilung: **28.02.2007**
(21) Anmeldenummer: 05009365.7
(22) Anmeldetag: 28.04.2005
(51) Int. Cl.: F16B 37/06

(54) **Austauschen einer Einpressmutter**
Replacement of a clinch nut
Remplacement d'un écrou de repli

(30) Priorität: 28.04.2004 DE 102004020696
(43) Veröffentlichungstag der Anmeldung: 02.11.2005
(73) Patentinhaber: NEDSCHROEF PLETTENBERG GmbH, 58840 Plettenberg (DE)
(72) Erfinder: Kob, Peter-Wilm, 58849 Herscheid (DE)
(74) Vertreter: Alber, Norbert

(56) Entgegenhaltungen:
- US-A- 3 053 300

## Beschreibung

### I. Anwendungsgebiet

Die Erfindung betrifft ein Verfahren zum Austauschen von Einpressmuttern. (US 3053300A).

### II. Technischer Hintergrund

An einem Blechteil fixierte Muttern, in der Regel Schweißmuttern, müssen manchmal zu Reparaturzwecken ausgetauscht werden, beispielsweise weil das Innengewinde der Mutter beschädigt oder zerstört ist, oder weil die entsprechend Blechfläche einer Bearbeitung unterzogen werden muss, bei der die daran befestigte Mutter stören würde.

Bei Schweißmuttern ist hierfür das Abschlagen oder Abflexen der Schweißmutter, Durchführen der ggf. notwendigen Blechbearbeitung und anschließendes genaues Positionieren und Aufschweißen der Schweißmutter notwendig, was u. a. einen erneuten Verzug des Blechteils bedingt, und umfangreiche Rostschutz- und Lackierarbeiten notwendig macht.

Einpressmuttern können zwar mittels verschiedener Methoden aus einem Blechteil entfernt, anschließend jedoch nicht mehr mit dem umgekehrt gleichen Befestigungsverfahren neu montiert werden.

Zwar wurde die Befestigung einer neuen Einpressmutter mit einem anschließenden manuellen Fixieren bisweilen durchgeführt, jedoch ergab dies grundsätzlich dann niedrigere Drehmoment-Belastbarkeiten der neuen Einpressmutter gegenüber der Belastbarkeit der ursprünglich eingesetzten Einpressmutter.

Natürlich ist auch das Einsetzen und Festschweißen einer neuen Einpressmutter in das Loch der alten Einpressmutter möglich, jedoch werden dann gerade die Nachteile der Schweißmuttern, nämlich Blechverzug und Lackierarbeiten, in Kauf genommen.

### III. Darstellung der Erfindung

### a) Technische Aufgabe

Es ist daher die Aufgabe der vorliegenden Erfindung, ein Austauschverfahren für Einpressmuttern zur Verfügung zu stellen, welches eine vergleichbar hohe Drehmoment-Belastbarkeit der neuen Einpressmutter ermöglicht und die Nachteile des Standes der Technik vermeidet.

### b) Lösung der Aufgabe

Diese Aufgabe wird durch Anspruch 1 gelöst. Vorteilhafte Ausführungsformen ergeben sich aus den Unteransprüchen.

Zuerst wird die alte Einpressmutter gelöst, was prinzipiell durch Überschreiten der Drehmomentbelastbarkeit geschieht. Zu diesem Zweck wird am einfachsten in die Mutter eine Schraube eingeschraubt, bis deren Kopf an der Mutter anliegt und anschließend mit einem Drehmoment deutlich größer, insbesondere um 50% bis 100% größer als das Soll-Haltedrehmoment der Mutter, weiter angezogen. Da durch dreht die alte Einpressmutter im Blechteil durch und kann danach entweder durch Zurückziehen in axialer Richtung zusammen mit der Schraube aus dem Blechteil herausbewegt werden, oder durch Schrägstellen gegenüber der lotrechten zum Blechteil herausgehebelt werden, was insbesondere dann gut funktioniert, wenn auf der Gegenseite des Blechteiles ein Halteteil mit einer ebenen Fläche am Blechteil angelegt wird.

Falls das Eindrehen einer Schraube in die Mutter nicht mehr möglich ist, kann durch drehfestes Anlegen eines Werkzeuges am Außenumfang des Kopfes der Einpressmutter ebenso verfahren werden.

Eine andere Möglichkeit besteht dadurch, mit einem Auspresswerkzeug, beispielsweise einem Durchschlag die Einpressmutter entgegen ihrer Einpressrichtung aus dem Blechteil herauszudrücken oder herauszuschlagen.

Anschließend muß die neue Einpressmutter im Blechteil befestigt werden, und zwar an gleicher Position, also im Stanzloch der alten Einpressmutter. Dies geschieht vorzugsweise durch Ansetzen oder auch teilweises Eindrücken der neuen Einpressmutter in Einpressrichtung in das vorhandene Loch im Blechteil und weiteres Hereinziehen der neuen Einpressmutter in das Loch mittels einer Zugschraube, die von der Rückseite, also in der Einpressrichtung entgegengesetzten Richtung her in die neue Einpressmutter eingeschraubt wird, bis deren Kopf am freien Ende des Schaftteiles bzw. an der entsprechenden Fläche des Blechteiles anliegt. Durch weiteres Festziehen der Einzugsschraube, die zur Schonung der Oberfläche des Blechteiles natürlich mit einer Beilagscheibe ausgestattet sein kann, wird die neue Einpressmutter in das alte Loch hereingezogen.

Um den Materialfluß im Blechteil in den Hinterschnitt hinter der dicksten Stelle des Schaftteiles der neuen Einpressmutter zu fördern, weist die Preßfläche, also die Preßfläche des Kopfes der Einzugsschraube oder die gegen das Blechteil gerichtete Preßfläche der Beilagscheibe, eine ringförmige, rotationssymmetrisch umlaufende Aufwölbung, insbesondere mit schräg nach innen abfallenden Flanken, auf. Diese Aufwölbung wird in radialer Richtung vorzugsweise so positioniert, dass die innere schräge Flanke der Aufwölbung nahe und insbesondere parallel zur Preßschräge des Schaftteiles oder unter einem größeren Schrägstellungswinkel gegenüber der Axialrichtung, insbesondere dem 2 bis 4-fachen Schrägstellungswinkel der Preßfläche der neuen Einpressmutter verläuft. Insbesondere sollte die Aufwölbung dabei größer sein als die Differenz zwischen der Blechdicke und der axialen Erstreckung des Schaftteiles der neuen Einpressmutter. Durch eine in axialer Richtung verlaufende äußere Flanke der Aufwölbung wird der Materialfluß zur Einpressmutter hin radial nach innen ebenfalls begünstigt.

Förderlich ist ferner, wenn die neue Einpressmutter auch hinsichtlich der Hinterschneidung des Schaftteiles und/oder des Mutternkopfes einen größeren Schrägstellungswinkel als die alte Einpressmutter aufweist.

### c) Ausführungsbeispiele

Eine Ausführungsform gemäß der Erfindung ist im Folgenden anhand der Figuren beispielhaft näher beschrieben. Es zeigen:
- Fig. 1:: eine im Blech fixierte alte Einpressmutter,
- Fig. 2a:: Überdrehen der alten Einpressmutter,
- Fig. 2b:: unterschiedliche Trennungsmethoden,
- Fig. 2c:: unterschiedliche Trennungsmethoden,
- Fig. 3:: Ansetzen und Hereinziehen der neuen Einpressmutter,
- Fig. 4:: eine Aufsicht auf die Einpressmutter von unten, und
- Fig. 5:: eine Seitenansicht der Einpressmutter der Fig. 4.

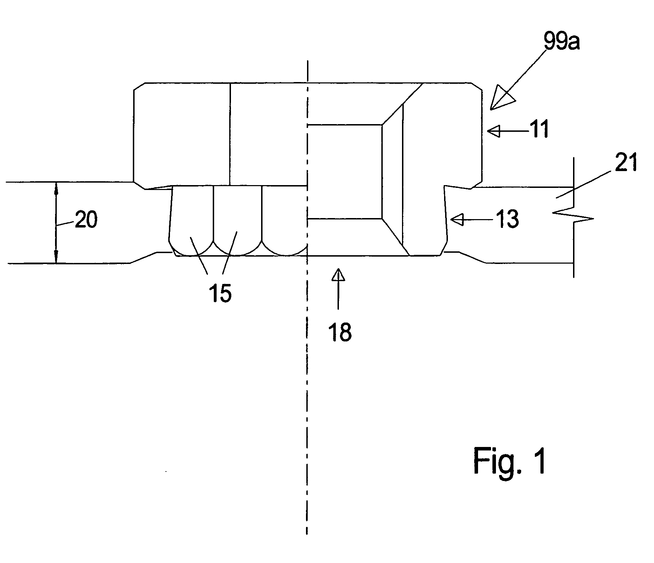

Fig. 1 zeigt die Ausgangsituation, nämlich die in einem Blechteil 21 durch Einpressen fixierte alte Einpressmutter 99a, die gegen eine neue Einpressmutter ersetzt werden soll.

Die Einpressmutter 99a wird im Blechteil 21 gehalten, in dem der Innenumfang des mittels der Einpressmutter aus dem Blechteil 21 ausgestanzten Loches 18 sich durch Materialverformung formschlüssig am Außenumfang des Schaftteiles 13, also den Polygonflächen 15 des Schaftteiles 13, der Einpressmutter 99a angelegt haben.

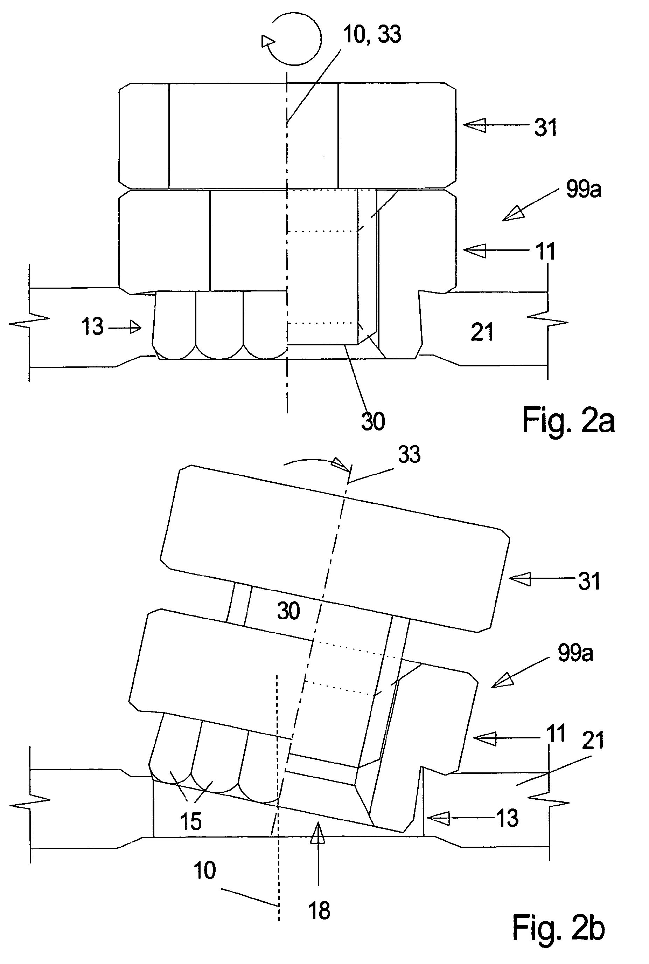

Zum Lösen der alten Einpressmutter 99a wird daher - wie in Fig. 2a dargestellt - zunächst von der Seite des Kopfes 11 der Einpressmutter 99a her eine Schraube 30, z. B. mit Sechskant-Kopf, in die Einpressmutter 99a eingeschraubt, bis deren Schraubenkopf 31 am Kopf 11 der Mutter 99a anliegt. Anschließend wird die Schraube 30 in Einschraubrichtung weitergedreht, und dadurch die Einpressmutter 99a mitgedreht, wodurch die formschlüssige Verbindung zwischen deren Schaftteil 13 der Einpressmutter 99a und dem Blechteil aufgehoben wird.

Um die Einpressmutter 99a aus dem Blechteil 21 herauszubewegen, sind mindestens zwei unterschiedliche Methoden denkbar, die auch kombiniert werden können:

Wie Fig. 2b zeigt, wird nach der einen Methode die Schraube 30 wieder rückwärts geschraubt, so dass deren Schraubenkopf 31 einen möglichst großen Abstand zur alten Einpressmutter 99a einnimmt, ohne die Gewindeverbindung zwischen beiden Bauteilen aufzuheben. Von Hand oder mit einem Werkzeug kann nun die Schraube 30 schräg gedrückt werden, also aus der lotrechten Lage zum Blechteil 21 aus soweit schräg gestellt werden, dass die Schraubenachse 33 möglichst schräg zur Axialrichtung 10 des Loches 18 steht. Dadurch stützt sich die Schulter 9 der alten Einpressmutter 99a auf der Oberseite des Bleches 21 ab, während der Rest, vor allem die gegenüberliegende Seite, des Schaftteiles 13 der alten Einpressmutter 99a dadurch aus dem Loch 18 herausgehoben wird. Durch weiteres Schrägstellen der Schraube 30 über einen Winkel von etwa 30° - 45° hinaus lässt sich auf diese Art und Weise die Einpressmutter 99a aus dem Blech 21 entfernen. Um eine Verformung des Randbereiches um das Loch 18 herum zu vermeiden, sollte dabei vorzugsweise eine Unterlage auf der Unterseite des Bleches verwendet werden.

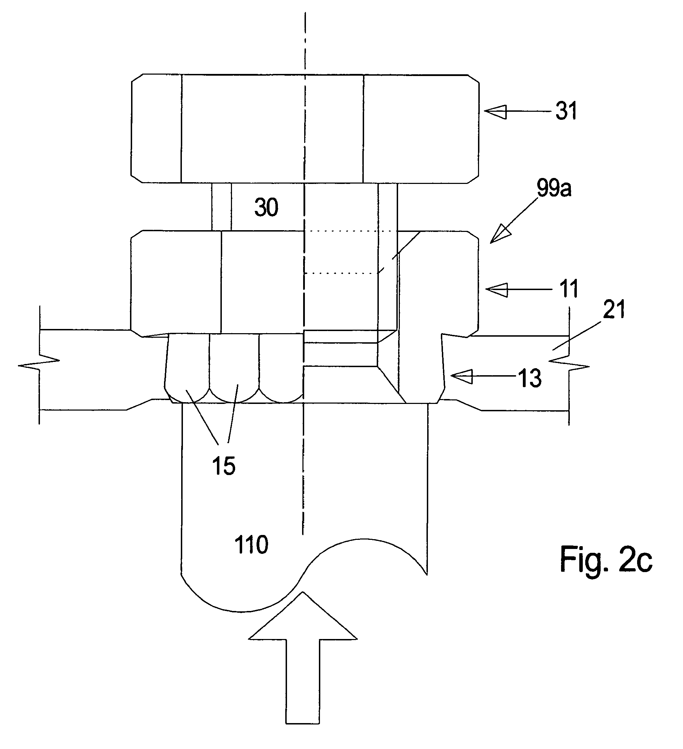

Die andere Methode besteht darin, nach Lösen der drehfesten Verbindung gemäß Fig. 2a die Schraube 30 wenigstens soweit, vorzugsweise vollständig, zurückzuschrauben, dass sie nicht über die schaftseitige Stirnfläche der Einpressmutter 99a vorsteht, und anschließend die alte Einpressmutter 99a in Axialrichtung 10, entgegen ihrer Einpressrichtung, mittels eines Auspresswerkzeuges, etwas eines Durchschlages 110 (Außendurchmesser kleiner als Außendurchmesser des Schaftteiles 13) aus dem Blechteil 21 herauszudrücken oder herauszuschlagen (Fig. 2c).

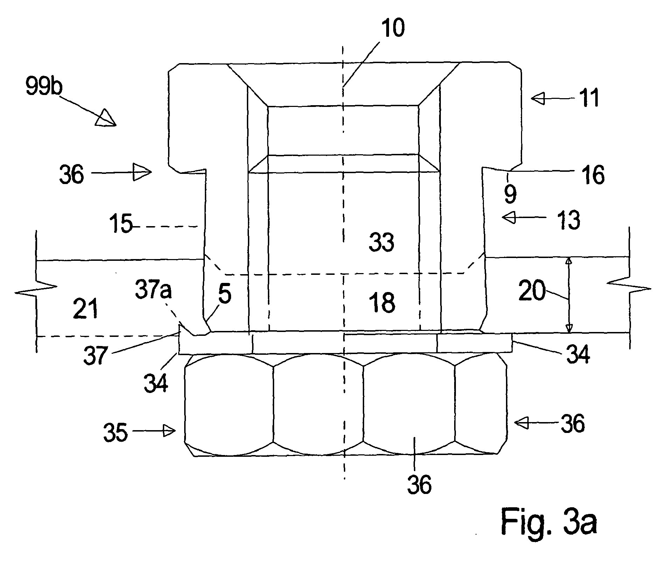

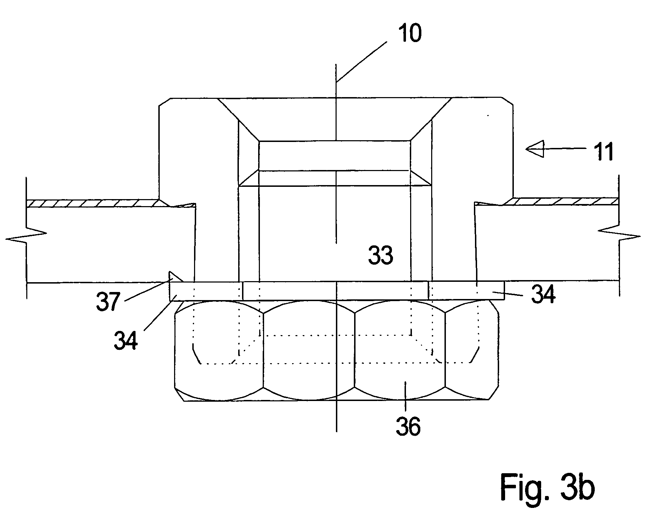

Das Einsetzen der neuen Einpressmutter 99b in das alte Loch 18 wird gemäß der Figuren 3a und 3b vollzogen:

Gemäß Fig. 3a wird die neue Einpressmutter 99b von der gleichen Richtung her auf das Blechteil 21 auf das Loch 18 aufgesetzt, wie die alte Einpressmutter 99a. Aufgrund der Verformungen des Loches 18 wird sich der Schaftteil 13 der neuen Einpressmutter 99b per Hand nur geringfügig in das Loch 18 hineindrücken lassen.

Nunmehr wird von der Gegenseite, also von der Schaftseite der neuen Einpressmutter 99b her, durch das Loch 18 des Blechteiles 21 hindurch eine Zugschraube 35 in die neue Einpressmutter 99b geschraubt, eventuell unter Zwischenlage einer Beilagscheibe 34 zwischen dem Zugschraubenkopf 36 und dem Blechteil 21. Durch Einschrauben und Festziehen der Zugschraube 35 gegenüber der Einpressmutter 99b wird diese mit ihrem Schaftteil 13 immer weiter in das Loch 18 des Blechteiles 21 hineingezogen, ist die Schulter 9 des Kopfteiles 11 der neuen Einpressmutter 99b auf der Oberseite des Blechteiles 21 anliegt.

Eine drehfeste, formschlüssige Verbindung zwischen dem Innenumfang des Loches 18 und dem Schaftteil 13, also den Polygonflächen 15, der neuen Einpressmutter 99b wird das Fließen des Materials des Blechteiles 21 im Bereich um das Loch 18 herum bewirkt. Zu diesem Zweck ist an der Pressfläche entweder der Beilagscheibe 34 oder - wenn keine Beilagscheibe verwendet wird - der Unterseite des Zugschraubenkopfes 36 eine vorzugsweise ringförmige umlaufende Aufwölbung 37 vorhanden, die in die Unterseite des Blechteiles 21 beim Festziehen der Zugschraube 35 eingepresst wird.

Dadurch wird das Material des Blechteiles 21 zum Ausweichen gezwungen, unter anderem in den hinterschnittenen Bereich des Schaftteiles 13 hinein und formschlüssig an die Polygonflächen 15 heran.

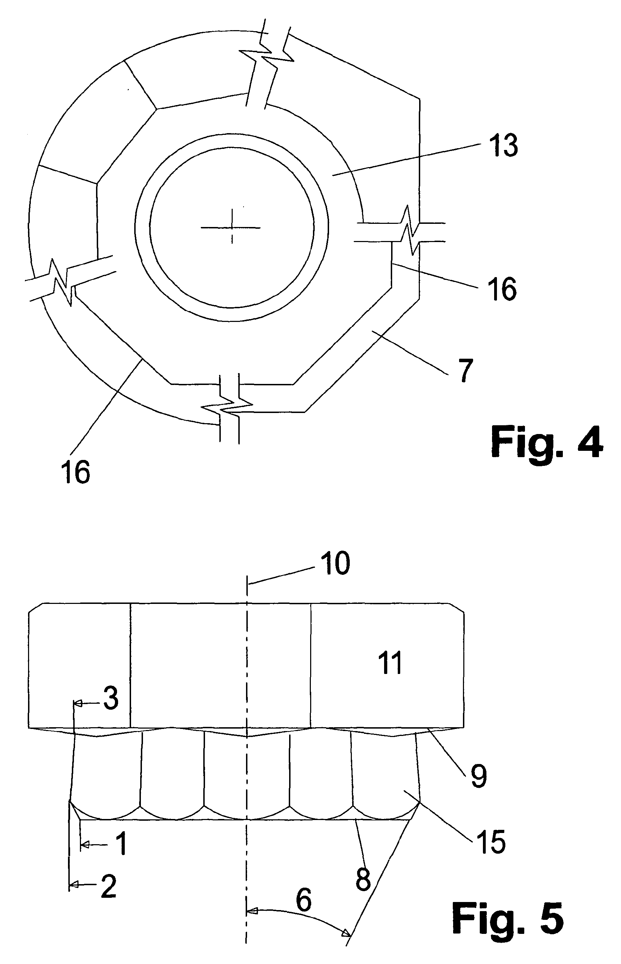

Aus dem gleichen Grund ist die Schulter 9 des Kopfes 11 vorzugsweise nicht plan ausgebildet, sondern mit in das Blechteil 21 hineinweisenden Erhebungen 16 versehen, die umlaufend um den Schaftteil 13 herum ausgebildet sind. Vorzugsweise ist auch oder zusätzlich die Schulter 9 nach außen abfallend ausgebildet, und bildet einen Presswinkel zwischen der Ebene des Blechteiles 21, also der Querebene zur Axialrichtung 10, und der Schulter 9, wie am besten in den Fig. 4 und 5 dargestellt.

Vorzugsweise ist dabei der Presswinkel 6 der neuen Einpressmutter 99b größer als bei der alten Einpressmutter 99a, und ebenso sind die Erhebungen 16, also Welligkeit bzw. Zackigkeit umlaufend entlang der Schulter 9, bei der neuen Einpressmutter 99b stärker ausgebildet als bei der alten Einpressmutter 99a. Ebenso ist der Presswinkel 6 am vorderen freien Ende des Schaftteiles 13 bei der neuen Einpressmutter 99b geringer, insbesondere um den Faktor 1,5 - 2,5, geringer also bei der alten Einpressmutter 99a. Der Schrägestellungswinkel α, den die nach innenweisende, schräge Flanke 37a der Aufwölbung 37 gegenüber der Axialrichtung 10 einnimmt, ist dagegen größer, insbesondere um das 2 - 4fache als der Pressewinkel 6 der neuen Einpressmutter 99b.

Die Fig. 5 lässt die Grundform der Einpressmutter am einfachsten erkennen, mit einem Schaftteil 13 und einem demgegenüber breiteren Kopfteil 11, die sich in Axialrichtung 10 aneinander anschließen, vorzugsweise einstückig miteinander ausgebildet sind und - bis auf die polygonen Außenkonturen - rotationssymmetrisch ausgebildet sind. Kopf 11 als auch Schaft 13 sind von einer Gewindebohrung 12 durchdrungen, die vorzugsweise als Durchgangsbohrung ausgebildet ist, jedoch auch eine Sacklochbohrung sein könnte mit einer dann geschlossenen freien Stirnfläche 8 am Schaftteil 13.

Der Außenumfang des Schaftteiles 13 ist über den Hauptteil seiner Länge als Polygon gestaltet mit schräg nach außen zum freien Ende des Schaftteiles hin abfallenden oder auch parallel zur Axialrichtung 10 verlaufenden Polygonflächen 15.

Die Polygonflächen 15 gehen nicht bis zur freien Stirnfläche 8 des Schaftteiles 13 durch, da der größte Durchmesser des Schaftteiles 13 nicht der Stanzdurchmesser 1 am vorderen freien Ende, also der Stirnfläche 8, ist, sondern ein demgegenüber zurück versetzter, größerer Pressdurchmesser 2.

Die Polygonflächen 15 laufen im Bereich der Pressschräge 5 zwischen dem Stanzdurchmesser 1 und dem Pressdurchmesser 2 aus, wodurch der Pressdurchmesser 2 hinsichtlich des Umfanges eine polygone Kontur ergibt, der Stanzdurchmesser 1 dagegen eine runde Kontur.

Um mittels der Hinterschneidung 14 in der Schulter 9 des Kopfteiles 11 ebenfalls eine drehfeste Verhakung der Einpressmutter im Blechteil zu bewirken, selbst bei rundem Außenumfang des Kopfes, sind mehrere Ausformungen, auch in Kombination miteinander, möglich.

Wie die Aufsicht auf die Schulter 9 in der Fig. 4 zeigt, wird bevorzugt die Hinterschneidung 14 nicht bis zum Außenumfang fortgesetzt, sondern geht vor Erreichen des äußeren Randes in eine Außenschräge 7 über. Die dadurch vom äußeren Rand nach innen versetzte Erhebung 16 läuft bei einer nicht runden Außenkontur des Kopfes 11, wie in der rechten Hälfte der Fig. 4 dargestellt, ebenfalls unrund um und ergibt bereits eine drehfeste, formschlüssige Verbindung gegenüber dem Blech.

Bei einer runden Außenkontur, wie in Fig. 4 in der linken Hälfte dargestellt, kann statt dessen trotz der runden Außenkontur diese Erhebung 16 in axialer Blickrichtung unrund, vorzugsweise polygon, also sechseckig bis zwölfeckig, gestaltet sein, und/oder wie in Fig. 5 ersichtlich wird die Schulter 9 in Umlaufrichtung gezackt oder gewellt ausgebildet, was in Fig. 4 im linken oberen Bildbereich dargestellt ist. Diese Wellung oder Zackung kann bis zum Außenumfang des Kopfes geführt werden, oder ebenfalls in einer entgegengesetzt nach außen ansteigenden Gegenschräge 7 enden, was das plane und formschlüssige, insbesondere spielfreie Anliegen der Außenkontur des Kopfes 11 auf dem Blechteil begünstigt.

### BEZUGSZEICHENLISTE

- 1: Stanzdurchmesser
- 2: Preßdurchmesser
- 3: Halsdurchmesser
- 4 5: Preßschräge
- 6: Preßwinkel
- 7: Außenschräge
- 8: Stirnfläche
- 9: Schulter
- 10: Axialrichtung
- 11: Kopf
- 12: Gewindebohrung
- 13: Schaftteil
- 14: Hinterschneidung
- 15: Polygonfläche
- 16: Erhebung
- 17 18: Loch
- 19: Butzen
- 20: Blechdicke
- 21: Blech
- 30: Schraube
- 31: Schraubenkopf
- 32: Pressfläche
- 33: Schraubenachse
- 34: Beilagscheibe
- 35: Zugschraube
- 36: Zugschraubenkopf
- 37: Aufwölbung
- 37a: Flanke
- 37b: Flanke
- 99a: alte Einpressmutter
- 99b: neue Einpressmutter

- 107: Aufwölbungs-Stirnfläche
- 110: Durchschlag

## Patentansprüche

1. Verfahren zum Austauschen einer Einpressmutter (99) an einem Blechteil (21) mit folgenden Schritten:
a) Lösen der alten Einpressmutter (99a) durch
- Einschrauben einer Schraube in den Kopf (11) der Einpressmutter (99a) bis zur Anlage des Schraubenkopfes (31) am Mutternkopf (11),
- Weiterdrehen der Schraube (30) und Drehen der Einpressmutter (99a) im Blechteil (21),
- Herausbewegen der Einpressmutter aus dem Blechteil, insbesondere durch Ausschieben in axialer Richtung (10) entgegen der Einpressrichtung oder Herausdrehen durch Weiterdrehen der Schraube (30) und gleichzeitiges Zurückziehen der Schraube oder Heraushebeln der Einpressmutter (99a) durch Verlagern der Schraubenachse (33) in eine Schrägstellung bezüglich der axialen Richtung (10),
b) Einbringen der neuen Einpressmutter (99b) durch
- Ansetzen bzw. Eindrücken der neuen Einpressmutter (99b) mit ihrem Schaftteil (13) in Einpressrichtung in das Loch (18) des Blechteiles (21), in dem sich vorher die alte Einpressmutter (99b) befand,
- Einschrauben einer Zugschraube (35) in die Einpressmutter (99b) von deren Schaftseite her, bis der Kopf (36) der Zugsschraube (35) am Blechteil anliegt,
- weiteres Festziehen der Zugsschraube bis zum ausreichenden Eindrücken der Schulter (9) des Muttern-Kopfes (36) in die gegenüberliegende Seite des Blechteiles (21),
- Herausdrehen der Einzugsschraube (35).

2. Verfahren nach Anspruch 1,
**dadurch gekennzeichnet, dass**
die Pressfläche (32) des Kopfes (36) der Zugsschraube (35) eine ringförmige, rotationssymmetrisch umlaufende Aufwölbung (37), insbesondere mit schrägen Flanken (37a), aufweist.

3. Verfahren nach einem der vorhergehenden Ansprüche,
**dadurch gekennzeichnet, dass**
die radiale Positionierung der Aufwölbung (37) so gewählt ist, dass die innere schräge Flanke (37a) der Aufwölbung nahe der Preßschräge (5) des Schaftteiles (13) positioniert ist.

4. Verfahren nach einem der vorhergehenden Ansprüche,
**dadurch gekennzeichnet, dass**
die Höhe der Aufwölbung größer ist als die Differenz zwischen Blechdicke (20) und axialer Erstreckung des Schaftteiles (13).

5. Verfahren nach einem der vorhergehenden Ansprüche,
**dadurch gekennzeichnet, dass**
nur die innere Flanke (37a) der Aufwölbung (37) schräg ausgebildet ist und die äußere Flanke (37b) in axialer Richtung verläuft.

6. Verfahren nach einem der vorhergehenden Ansprüche,
**dadurch gekennzeichnet, dass**
der Schrägstellungswinkel (β) der inneren Flanke (37a) der Aufwölbung (37) gegenüber der Axialrichtung (10) größer, insbesondere das 2 - 4-fache größer gegenüber dem Schrägstellungswinkel (6) der Pressfläche (5) ist.

7. Verfahren nach einem der vorhergehenden Ansprüche,
**dadurch gekennzeichnet, dass**
die neue Einpressmutter (99b) einen größeren Schrägstellungswinkel (β) der Hinterschneidung (14) der Schulter (9) des Mutternkopfes aufweist als die entfernte alte Einpressmutter (99a).

## Claims

1. A process for replacing a clinch nut (99) on a sheet metal part (21) comprising the following steps:
a) Disengaging the old insert clinch nut (99a) through
- Threading a bolt into the head (11) of the clinch nut (99a) until the bolt head (31) abuts to the nut head (11),
- further rotation of the bolt (30) and rotation of the clinch nut (99a) in the sheet metal part (21),
- moving the clinch nut out of the sheet metal part, in particular through pushing it out in axial direction (10), opposite to the insertion direction, or turning it out through further rotation of the bolt (30), and simultaneous retraction of the bolt or levering the clinch nut (99a) out through moving the bolt axis (33) into a tilted position relative to the axial direction (10),
b) inserting the new clinch nut (99b) through
- applying or inserting the new clinch nut (99b) with its shaft section (13) in insertion direction into the hole (18) of the sheet metal part (21), in which the old clinch nut (99b) was previously located,
- threading a tension bolt (35) into the clinch nut (99b) from its shaft side, until the head (36) of the tension bolt (35) abuts to the sheet metal part,
- further tightening of the tension bolt until the shoulder (9) of the nut head (36) is sufficiently impressed into the opposite side of the sheet metal part (21),
- turning the insertion bolt (35) out.

2. A process according to claim 1,
**characterized in that**
the press surface (32) of the head (36) of the insertion bolt (35) comprises an annular, rotation symmetric circumferential bulge (37), in particular with slanted flanks (37a).

3. A process according to one of the preceding claims,
**characterized in that**
the radial positioning of the bulge (37) is selected so, that the inner slanted flank (37a) of the bulge is positioned close to the press slant (5) of the shaft section (13).

4. A process according to one of the preceding claims,
**characterized in that**
the height of the bulge is larger than the difference between the sheet metal thickness (20) and the axial extension of the shaft section (13).

5. A process according to one of the preceding claims,
**characterized in that**
only the inner flank (37a) of the bulge (37) is provided slanted, and the outer flank (37b) extends in axial direction.

6. A process according to one of the preceding claims,
**characterized in that**
the slant angle (β) of the inner flank (37a) of the bulge (37) is larger, relative to the axial direction (10), in particular 2 to 4 times larger compared to the slant angle (6) of the press surface (5).

7. A process according to one of the preceding claims,
**characterized in that**
the new clinch nut (99b) has a larger slant angle (β) of the undercut (14) of the shoulder (9) of the nut head, than the old insert nut (99a), which has been removed.

## Revendications

1. Procédé pour le remplacement d'un écrou à sertir (99) sur une pièce de tôle (21) comprenant les étapes suivantes :
a) desserrage de l'ancien écrou à sertir (99a) par
- vissage d'une vis dans la tête (11) de l'écrou à sertir (99a) jusqu'à ce que la tête de vis (31) s'applique contre la tête d'écrou (11),
- poursuite de la rotation de la vis (30) et rotation de l'écrou à sertir (99a) dans la pièce de tôle (21),
- extraction de l'écrou à sertir hors de la pièce de tôle, en particulier par extraction dans le sens axial (10) à l'encontre de la direction de pressage ou dévissage en continuant à tourner la vis (30) et retrait simultané de la vis ou sortie par levier de l'écrou à sertir (99a) par déplacement de l'axe de vis (33) dans une position oblique par rapport à la direction axiale (10),
b) introduction du nouvel écrou à sertir (99b) par
- placement respectivement enfoncement du nouvel écrou à sertir (99b) avec une partie de tige (13) dans la direction de pressage dans le trou (18) de la pièce en tôle (21), dans lequel se trouvait auparavant l'ancien écrou à sertir (99b),
- vissage d'une vis de traction (35) dans l'écrou à sertir (99b) depuis le côté de la tôle, jusqu'à ce que la tête (36) de la vis de traction (35) s'applique contre la pièce de tôle,
- poursuite du serrage de la vis de traction jusqu'à enfoncement suffisant de l'épaulement (9) de la tête d'écrou (36) dans la face opposée de la pièce de tôle (21),
- dévissage de la vis de traction (35),

2. Procédé selon la revendication 1,
**caractérisé en ce que** la surface de pressage (32) de la tête (36) de la vis de traction (35) présente un bombement annulaire, tournant symétriquement en rotation (37), en particulier avec des flancs obliques (37a).

3. Procédé selon l'une des revendications précédentes,
**caractérisé en ce que** la position radiale du bombement (37) est sélectionnée de sorte que le flanc interne oblique (37a) du bombement est positionné prés du biseau de pression (5) de la partie de tige (13).

4. Procédé selon l'une des revendications précédentes,
**caractérisé en ce que** la hauteur du bombement est plus grande que la différence entre l'épaisseur de tôle (20) et l'extension axiale de la partie de tige (13).

5. Procédé selon l'une des revendications précédentes, **caractérisé en ce que** seulement le flanc interne (37a) du bombement (37) est de forme oblique et le flanc externe (37b) s'étend dans le sens axial.

6. Procédé selon l'un des revendications précédentes, **caractérisé en ce que** l'angle de position oblique (β) du flanc interne (37a) du bombement (37) est plus grand par rapport à la direction axiale (10), en particulier de 2 à 4 fois plus grand par rapport à l'angle de position oblique (6) de la face de pressage (5).

7. Procédé selon l'une des revendications précédentes, **caractérisé en ce que** le nouvel écrou de pressage (99b) présente un angle de position oblique (β) de la dépouille (14) de l'épaulement (9) de la tête d'écrou plus grand que l'ancien écrou de pressage retiré (99a).
